# EUROPEAN PATENT SPECIFICATION

(11) **EP 2 554 371 B1**
(45) Date of publication and mention of the grant of the patent: **23.03.2016**
(21) Application number: 11762888.3
(22) Date of filing: 30.03.2011
(51) Int. Cl.: B32B 27/18, B32B 27/36

(54) **POLYESTER FILM**
POLYESTERFOLIE
FILM DE POLYESTER

(30) Priority: 30.03.2010 JP 2010079106
(43) Date of publication of application: 06.02.2013
(73) Proprietor: Mitsubishi Plastics, Inc., Tokyo 100-8252 (JP)
(72) Inventor: KOUDA, Toshihiro, Maibara-shi Shiga 521-0234 (JP); FUJITA, Masato, Maibara-shi Shiga 521-0234 (JP)
(74) Representative: Stuttard, Garry Philip
(86) International application number: PCT/JP2011/058040
(87) International publication number: WO 2011/122664

(56) References cited:
- WO-A1-2008/078698
- WO-A1-2009/119011
- JP-A- 2007 077 363
- JP-A- 2007 297 565
- JP-A- 2008 023 923
- JP-A- 2008 212 837
- JP-A- 2009 001 801
- JP-A- 2009 092 893
- JP-B2- 3 966 171

## Description

### TECHNICAL FIELD

The present invention relates to a polyester film. Specifically, the present invention relates to a polyester film with a coating layer that has favorable appearance quality and antistatic properties.

### BACKGROUND ART

In general, films made of polyester typified by polyethylene terephthalate or polyethylene naphthalate are excellent in properties such as mechanical strength, dimensional stability, flatness, heat resistance, chemical resistance, and optical properties and also excellent in cost performance. The polyester films are therefore used in a wide range of applications including, for example, base films for magnetic recording media, plate making films, packaging films, and optical films. The polyester films, however, tend to be charged due to generated static electricity and therefore disadvantageously attract their neighboring dust. Also, for the same reason, the polyester films tend to cause traveling failure during processing. Unfortunately, products processed from the polyester films also hardly have favorable traveling performance.

Thus, it has heretofore been known that an antistatic coating layer is formed on a polyester film by applying a coating liquid containing a conductive compound such as polythiophene to the surface of the polyester film and drying the coating liquid thereon. For example, Patent Document 1 discloses that a coating layer is formed on a polyester film by applying a coating liquid containing a conductive compound in combination with a polyglycerol compound to one surface of the polyester film and drying the coating liquid thereon. Also, Patent Document 2 discloses that a coating layer is formed on a polyester film by applying a coating liquid containing a conductive compound in combination with an epoxy crosslinking agent to one surface of the polyester film and drying the coating liquid thereon.

### PRIOR ART DOCUMENTS

Patent Document 1: Japanese Laid-Open Patent Publication No. 2008-23923
Patent Document 2: Japanese Patent No. 3966171

### SUMMARY OF THE INVENTION

### Problems that the Invention is to Solve

However, the antistatic properties of the coating layer disclosed in Patent Document 1 are susceptible to time-dependent deterioration. Moreover, the coating layer disclosed in Patent Document 2 may cause poor appearance such as reduced transparency or whitening. Polyester films with such a coating layer are not easy to apply to optical use.

As a result of diligent studies, the inventors have found that a coating layer obtained using a polyglycerol compound and an epoxy crosslinking agent in combination has favorable appearance quality and that the antistatic properties of the coating layer are less susceptible to time-dependent deterioration. The present invention is based on these findings.

An objective of the present invention is to provide a polyester film with a coating layer that has favorable appearance quality and antistatic properties less susceptible to time-dependent deterioration.

### Means for Solving the Problems

To achieve the foregoing objective and in accordance with one aspect of the present invention, a polyester film with a coating layer is provided. The coating layer is formed on the polyester film by applying a coating liquid to at least one surface of the polyester film and drying the coating liquid thereon. The coating liquid contains an electron conductive compound; at least one compound selected from the group consisting of a polyalkylene oxide, glycerol, a polyglycerol, and an alkylene oxide adduct of glycerol or polyglycerol, or at least one derivative thereof; and an epoxy crosslinking agent.

The term "film" is used herein as the same meaning as in the term "sheet".

### MODES FOR CARRYING OUT THE INVENTION

Hereinafter, one embodiment of the present invention will be described.

A polyester film of the present embodiment has an antistatic coating layer formed on one surface of the polyester film. A polyester material constituting the polyester film is obtained by melt-polycondensing a dicarboxylic acid component such as terephthalic acid, isophthalic acid, 2,6-naphthalenedicarboxylic acid, adipic acid, sebacic acid, 4,4'-diphenyldicarboxylic acid, 1,4-cyclohexyldicarboxylic acid, and an ester thereof and a glycol component such as ethylene glycol, diethylene glycol, triethylene glycol, propylene glycol, 1,4-butanediol, neopentyl glycol, and 1,4-cyclohexanedimethanol. Polyester formed form the dicarboxylic acid component and the glycol component may be obtained by any method known in the art. For example, the polyester can be obtained by a method involving first substantially forming bis-glycol ester of aromatic dicarboxylic acid or a low polymer thereof through the transesterification reaction between lower alkyl ester of aromatic dicarboxylic acid and glycol or through the direct esterification of aromatic dicarboxylic acid and glycol, and subsequently polycondensing the bis-glycol ester or its low polymer by heating under reduced pressure. According to the purpose, aliphatic dicarboxylic acid may be copolymerized with the aromatic dicarboxylic acid.

Specific examples of the polyester material constituting the polyester film include polyethylene terephthalate, polyethylene-2,6-naphthalate, and poly-1,4-cyclohexanedimethylene terephthalate. Any of other polyesters obtained by copolymerizing the dicarboxylic acid component and the glycol component may be used as the polyester material. Also, additional components other than the dicarboxylic acid component and the glycol component, and additives may be used, if necessary, for obtaining the polyester material.

A polyester film of the present embodiment may contain particles for the purpose of ensuring the traveling properties of the film and preventing the film from being flawed. Examples of such particles include: particles of inorganic material such as silica, calcium carbonate, magnesium carbonate, calcium phosphate, kaolin, talc, aluminum oxide, titanium oxide, alumina, barium sulfate, calcium fluoride, lithium fluoride, zeolite, and molybdenum sulfide; particles of organic material such as crosslinked polymers and calcium oxalate; and particulate matter deposited during a polyester production process.

The size and amount of the particles contained in the polyester film should be determined according to the use and purpose of the polyester film. The average particle size of the particles used is preferably in the range of 0.01 to 5.0 µm. Use of the particles having an average particle size of 5.0 µm or smaller does not increase too much the surface roughness of the polyester film and prevents the particles from coming off the surface of the polyester film. Use of the particles having an average particle size of 0.01 µm or larger easily produces a polyester film that has surface roughness to a degree required for the polyester film to exhibit sufficient slidability. The content of the particles in the polyester film is preferably 0.0003 to 1.0% by weight, more preferably 0.0005 to 0.5% by weight. A polyester film containing 0.0003% by weight or more of the particles tends to have sufficient slidability. A polyester film containing 1.0% by weight or less of the particles tends to have sufficient transparency. In addition to or instead of the particles, appropriate additives such as a stabilizer, a lubricant, and an antistatic agent may be added into the polyester film.

The polyester film can be prepared by a film formation method known in the art. For example, first, a polyester sheet obtained by melt extrusion can be uniaxially stretched 2- to 6-fold at a temperature of 70 to 145°C by a roll drawing method, then stretched 2- to 6-fold in a direction orthogonal to the preceding stretching direction at a temperature of 80 to 160°C in a tenter, and further heat-treated at a temperature of 150 to 250°C for 1 to 600 seconds to obtain the polyester film of interest. It is preferred that the polyester film should be relaxed 0.1 to 20% in the longitudinal and/or lateral directions during the heat treatment and/or during cooling after the heat treatment.

The antistatic coating layer formed on one surface of the polyester film has the properties of being capable of charge leakage because of its low surface specific resistivity. For exhibiting favorable antistatic properties, it is preferred that the antistatic coating layer should have surface specific resistivity as low as possible, specifically surface specific resistivity of preferably 1 × 10¹² Ω or lower, more preferably 1 × 10⁸ Ω or lower.

The antistatic coating layer is formed on the polyester film by applying a coating liquid containing three components, namely component A, component B, and component C, described below to one surface of the polyester film and drying the coating liquid thereon. The component A contained in the coating liquid is an electron conductive compound. The component B is at least one compound selected from the group consisting of a polyalkylene oxide, glycerol, a polyglycerol, and an alkylene oxide adduct of glycerol or polyglycerol, or at least one derivative thereof. The component C is an epoxy crosslinking agent.

In general, an ionic conductive compound such as an anionic compound and a cationic compound, a hydrophilic nonionic compound such as polyethylene oxide, and an electron conductive compound are known as compounds that are applied to polyester films for an antistatic purpose.

The ionic conductive compound has the mechanism under which charges are moved by ions generated by the action of hydrophilic ionic functional groups on water in air. This compound is highly likely to be influenced by water, as in the case of the hydrophilic nonionic compound. Thus, when the ionic conductive compound or the hydrophilic nonionic compound is applied to the polyester film, the resulting film is disadvantageously easily whitened upon contact with an organic solvent or in a high humidity environment. In addition, these compounds often exhibit insufficient antistatic effect.

In contrast, the electron conductive compound is less influenced by water than the ionic conductive compound. Thus, the antistatic coating layer containing the electron conductive compound hardly causes reduction in appearance quality such as whitening in a high humidity environment. Specific examples of the electron conductive compound include an electron conductive organic compound such as polyacetylene, polyphenylene, polyaniline, polypyrrole, polyisothianaphthene, and polythiophene. Among them, a polymer obtained by homopolymerizing or copolymerizing thiophene or a thiophene derivative is preferable. The electron conductive compound is more preferably a thiophene or thiophene derivative polymer doped with an anionic compound or a self-doped form having an anionic group in the polymer. These compounds have excellent conductivity. More specifically, polythiophene obtained by polymerizing a compound represented by the following general formula (1) or (2) in the presence of a polyanionic. ion may be used.

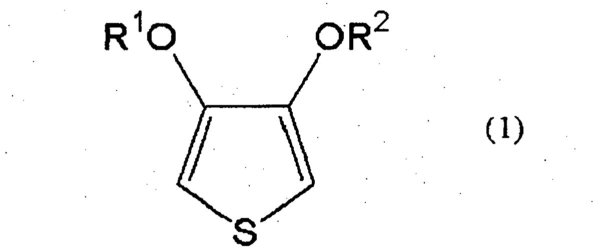

In the formula (1), R¹ and R² each independently represent hydrogen, an aliphatic, alicyclic, or aromatic hydrocarbon group having 1 to 20 carbon atoms, a hydroxy group.

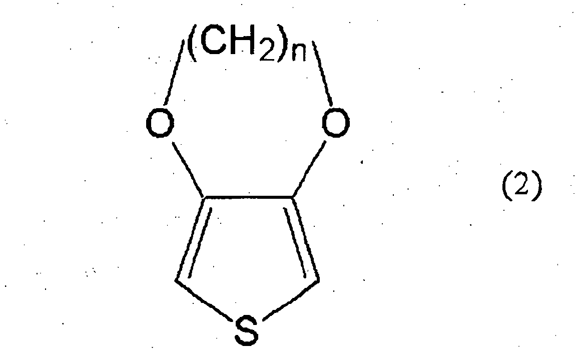

In the formula (2), n represents an integer of 1 to 4.

Examples of the polyanionic ion used in the polymerization include an organic acid such as poly(meth)acrylic acid, polymaleic acid, and polystyrenesulfonic acid. These organic acids may be partially or completely neutralized for use. The polymer can be produced by a method as described in, for example, Japanese Laid-Open Patent Publication No. 7-90060.

Polythiophene obtained by polymerizing a compound represented by the formula (2), where n is 2, in the presence of polystyrenesulfonic acid is particularly preferably used as the electron conductive compound.

At least one compound selected from the group consisting of a polyalkylene oxide, glycerol, a polyglycerol, and an alkylene oxide adduct of glycerol or polyglycerol, or at least one derivative thereof, which is the component B contained in the coating liquid used for forming the antistatic coating layer, is used in combination with an epoxy crosslinking agent, which is the component C, to thereby improve the appearance quality of the antistatic coating layer and prevent time-dependent deterioration in the antistatic properties of the antistatic coating layer.

A polyalkylene oxide or its derivative used as the component B preferably has an ethylene oxide or propylene oxide skeleton, and more preferably has an ethylene oxide skeleton. Use of a polyalkylene oxide or its derivative having an ethylene oxide or propylene oxide skeleton as the component B further improves the antistatic properties and transparency of the antistatic coating layer as a result of uniform dispersion of the component B in the coating liquid.

Specific examples of the glycerol and the polyglycerol used as the component B include a compound represented by the following general formula (3).

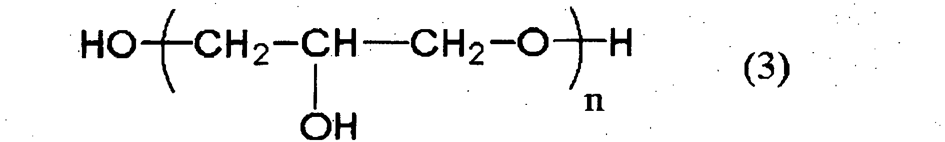

The compound represented by the formula (3) where n is 1 is glycerol. The compound represented by the formula (3) where n is 2 or larger is a polyglycerol. In the formula (3), n is preferably 1 to 20, more preferably 2 to 20. Use of a polyglycerol further improves the transparency of the resulting antistatic coating layer than use of the glycerol.

The alkylene oxide adduct of glycerol or polyglycerol used as the component B refers to a compound in which an alkylene oxide or its derivative is addition-polymerized to a hydroxyl group in glycerol or a polyglycerol represented by the general formula (3). Different alkylene oxides or derivatives thereof may be added on a hydroxyl group basis. In addition, the alkylene oxide or its derivative can be added to at least one hydroxyl group in the molecule of the alkylene oxide adduct. It is not necessarily required that alkylene oxides or derivatives thereof should be added to all hydroxyl groups in the molecule of the alkylene oxide adduct, respectively.

An alkylene oxide or its derivative added to a hydroxyl group in glycerol or a polyglycerol preferably has an ethylene oxide or propylene oxide skeleton, and more preferably has an ethylene oxide skeleton. Use of a compound in which ethylene oxide, propylene oxide, or a derivative thereof is added to a hydroxyl group in glycerol or a polyglycerol as the component B further improves the antistatic properties and transparency of the antistatic coating layer as a result of uniform dispersion of the component B in the coating liquid.

A polyglycerol and an alkylene oxide adduct of glycerol or polyglycerol are particularly preferably used as the component B. Use of any one of them further improves the appearance quality of the resulting antistatic coating layer. A polyglycerol particularly preferably used as the component B is a compound represented by the formula (3) where n is 2 to 20. Moreover, an alkylene oxide adduct particularly preferably used as the component B is a compound in which ethylene oxide or polyethylene oxide is added to a polyglycerol represented by the formula (3) where n is 2. It is preferred that the number of alkylene oxide added should be set such that the resulting alkylene oxide adduct should have an weight-average molecular weight in the range of 300 to 2,000.

The copolymerization ratio between glycerol or a polyglycerol and an alkylene oxide or its derivative in the alkylene oxide adduct of glycerol or polyglycerol is not particularly limited and is set such that the amount of the alkylene oxide or alkylene oxide derivative moiety is preferably 20 times or less, and more preferably 10 times or less of the amount of the glycerol or polyglycerol moiety on a molecular weight basis. Setting to this ratio further improves the appearance quality of the resulting antistatic coating layer.

An epoxy crosslinking agent, which is the component C, is used in combination with the component B to thereby improve the appearance quality of the antistatic coating layer and prevent time-dependent deterioration in the antistatic properties of the antistatic coating layer. Examples of the epoxy crosslinking agent include a sorbitol polyglycidyl ether crosslinking agent, a polyglycerol polyglycidyl ether crosslinking agent, a diglycerol polyglycidyl ether crosslinking agent, and a polyethylene glycol diglycidyl ether crosslinking agent. For example, an epoxy compound "Denacol" manufactured by Nagase ChemteX Corp. (e.g., EX-611, EX-614, EX-614B, EX-512, EX-521, EX-421, EX-313, EX-810, EX-830, and EX-850), a diepoxy-polyepoxy compound manufactured by Sakamoto Yakuhin Kogyo Co., Ltd. (e.g., SR-EG, SR-8EG, and SR-GLG), or an epoxy crosslinking agent "EPICLON", EM-85-75W or CR-5L, manufactured by Dainippon Ink and Chemicals, Inc. can be used.

The amount of the electron conductive compound (component A) in the total mass of the antistatic coating layer is not limited and is preferably 90% by mass or less, more preferably 80% by mass or less, and further preferably 60% by mass or less. Setting of the upper limit of the amount of the electron conductive compound to this range easily produces an antistatic coating layer having sufficient transparency and antistatic properties. The amount of the electron conductive compound in the total mass of the antistatic coating layer is also preferably 1% by mass or more, and more preferably 2% by mass or more. Setting of the lower limit of the amount of the electron conductive compound to this range can produce a thinner antistatic coating layer capable of exhibiting required antistatic properties. A thinner antistatic coating layer has more improved appearance quality and transparency and achieves lower cost. In addition, film blocking hardly occurs.

The amount of the component B in the total mass of the antistatic coating layer is not limited and is preferably 80% by mass or less, more preferably 75% by mass or less, and further preferably 70% by mass or less. Setting of the upper limit of the amount of the component B to this range renders the antistatic properties of the antistatic coating layer much less susceptible to time-dependent deterioration. The amount of the component B in the total mass of the antistatic coating layer is also preferably 5% by mass or more, more preferably 20% by mass or more, and more preferably 40% by mass or more. Setting of the lower limit of the amount of the component B to this range further improves the appearance quality and transparency of the antistatic coating layer.

The amount of the epoxy crosslinking agent (component C) in the total mass of the antistatic coating layer is not limited and is preferably 60% by mass or less, more preferably 40% by mass or less, and further preferably 35% by mass or less. Setting of the upper limit of the amount of the epoxy crosslinking agent to this range further improves the appearance quality and transparency of the antistatic coating layer. The amount of the epoxy crosslinking agent in the total mass of the antistatic coating layer is also preferably 5% by mass or more, more preferably 7.5% by mass or more, and further preferably 10% by mass or more. Setting of the lower limit of the amount of the epoxy crosslinking agent to this range renders the antistatic properties of the antistatic coating layer much less susceptible to time-dependent deterioration.

The ratio between the component B and the component C in the antistatic coating layer is set such that when the mass of the component C is represented by 1, the mass of the component B is represented by preferably 0.3 to 15, more preferably 1 to 10, and further preferably 1.5 to 7.5. Setting to this ratio further improves the appearance quality of the antistatic coating layer and renders the antistatic properties of the antistatic coating layer much less susceptible to time-dependent deterioration.

The coating liquid used for forming the antistatic coating layer may be supplemented with a surfactant in order to improve applicability to the polyester film. It is preferred that the surfactant used should have the structure of (poly)alkylene oxide or its derivative or the structure of (poly)glycerol or its derivative. Such a surfactant does not inhibit the antistatic properties of the antistatic coating layer.

The coating liquid used for forming the antistatic coating layer may be supplemented with a crosslinking reactive compound other than the component C for the purpose of improving the cohesive properties, surface hardness, abrasion resistance, solvent resistance, or water resistance of the antistatic coating layer without inhibiting the advantages of the present invention. Examples of the crosslinking reactive compound include: an amino resin such as melamine resin, benzoguanamine resin, and urea resin; and an isocyanate compound, and an oxazoline compound, and a glyoxal compound. Other crosslinking reactive compounds in a polymer form having a crosslinking reactive group in the polymer skeleton may be used. The crosslinking reactive compound may be used as part of the component B. The crosslinking reactive compound having the structure of (poly)alkylene oxide or its derivative or the structure of (poly)glycerol or its derivative can be suitably used because it does not inhibit the antistatic properties of the antistatic coating layer.

At least one water-soluble or water-dispersible binder resin can further be used, if necessary. Examples of the binder resin include a polyether resin, a polyester resin, a polyurethane resin, an acrylic resin, a vinyl resin, an epoxy resin, and an amide resin. The skeleton of the binder resin may substantially have a composite structure, for example, by copolymerization. Examples of the binder resin having the composite structure include an acrylic resin-grafted polyester, an acrylic resin-grafted polyurethane, a vinyl resin-grafted polyester, and a vinyl resin-grafted polyurethane. Use of the binder resin in the coating liquid improves the strength of the resulting antistatic coating layer and the adhesiveness of the resulting antistatic coating layer to the base film.

The coating liquid may contain an additive such as an antifoaming agent, an applicability-improving agent, a thickener, an organic lubricant, a release agent, organic particles, inorganic particles, an antioxidant, an ultraviolet absorbing agent, a foaming agent, a dye, and a pigment. These additives may be used alone or in combination of two or more thereof as appropriate. An additive having the structure of (poly)alkylene oxide or its derivative or the structure of (poly)glycerol or its derivative can be suitably used because it does not inhibit the antistatic properties of the antistatic coating layer.

The coating liquid is preferably an aqueous solution or aqueous dispersion in view of handleability, working environment, and stability. However, an organic solvent may be contained in the coating liquid.

As described above, the antistatic coating layer is formed on a polyester film by applying the coating liquid to one surface of the polyester film and drying the coating liquid thereon. Preferably, the formation of the antistatic coating layer is performed by an inline coating method.

The formation of the antistatic coating layer by the inline coating method is performed by applying the coating liquid to one surface of the polyester film during the production process of the polyester film, more specifically, at any stage from the melt extrusion of a polyester material to heat setting and rolling up after biaxial stretching. Typically, the coating liquid is applied to any of an unstretched polyester film in a substantially amorphous state obtained by rapid cooling after melting, a uniaxially stretched polyester film obtained by stretching the unstretched polyester film in the lengthwise (longitudinal) direction, and a biaxially stretched polyester film before heat setting. Particularly, an excellent method involves applying the coating liquid to the uniaxially stretched polyester film, then drying the coating liquid thereon in a tenter, and stretching the film in the lateral direction, followed by heat treatment. The formation of the polyester film simultaneous with the formation of the antistatic coating layer is advantageous in view of production cost. When the film is stretched after the application of the coating liquid, a thin antistatic coating layer is easily formed. Furthermore, the coating liquid applied on the film is heat-treated together with the film to thereby improve the film formability of the coating liquid and also improve the adhesiveness between the resulting antistatic coating layer and the polyester film. The inline coating method also has the advantage that few reaction residues remain in the antistatic coating layer because of high temperature during heat treatment. The reaction residues in the antistatic coating layer are responsible for blocking during the rolling up of the polyester film in a roll form or disadvantageously react with components in a top coating layer that may be formed on the antistatic coating layer in a subsequent step.

The application of the coating liquid to the polyester film may be performed by any method known in the art. This application can be performed by, for example, an application method as described in Yuji Harazaki's "Coating Methods" (Maki Shoten Co., Ltd., published in 1979), more specifically, a method such as an air doctor coater, a blade coater, a rod coater, a knife coater, a squeeze coater, a dip coater, a reverse roll coater, a transfer roll coater, a gravure coater, a kiss-roll coater, a cast coater, a spray coater, a curtain coater, a calendar coater, an extrusion coater, and a bar coater.

The surface of the polyester film may be subjected to chemical treatment, corona discharge treatment, or plasma treatment before the application of the coating liquid in order to facilitate the application or adhesion of the coating liquid to the polyester film.

The amount of the coating liquid applied to the polyester film is set such that the weight per unit area of the resulting antistatic coating layer is in the range of preferably 0.005 to 1.5 g/m², more preferably 0.008 to 1.0 g/m², and further preferably 0.01 to 0.5 g/m². The weight per unit area of 0.005 g/m² or larger makes it easy to ensure antistatic properties necessary for the antistatic coating layer. The weight per unit area of 1.5 g/m² or smaller makes it easy to ensure appearance quality and transparency necessary for the antistatic coating layer, and also achieves low cost. In addition, film blocking hardly occurs.

The present embodiment can produce the following advantages.

A polyester film of the present embodiment has an antistatic coating layer obtained by applying a coating liquid containing the three components A to C to one surface of the polyester film and drying the coating liquid thereon. The antistatic coating layer has favorable appearance quality and antistatic properties less susceptible to time-dependent deterioration. A polyester film of the present embodiment can therefore be suitably used in a wide range of applications including applications required to be antistatic, such as base films for magnetic recording media, plate making films, packaging films, and optical films.

When a polymer obtained by polymerizing thiophene or a derivative thereof is used as an electron conductive compound, which is the component A contained in the coating liquid, the resulting antistatic coating layer has improved conductivity.

The embodiment described above may be changed as follows.

The polyester film used in the embodiment described above may have any of monolayer and multilayer structures. For the multilayer polyester film, a polyester material constituting each layer is selected for use according to the purpose, and a different polyester material may be used for each layer.

The antistatic coating layer may be formed not only on one surface of the polyester film but also on both surfaces thereof.

### Examples

Hereinafter, the present invention will be described more specifically with reference to Examples and Comparative Examples. However, the present invention is not intended to be limited to them.

Polyethylene terephthalate with limiting viscosity of 0.66 containing substantially no particulate matter and polyethylene terephthalate with limiting viscosity of 0.66 containing 0.6 parts by weight of amorphous silica having an average particle size of 2.5 µm were blended at a weight ratio of 80/20, sufficiently dried, and melted by heating to a temperature of 280 to 300°C. The melted product was extruded into a sheet from a T-shaped die and solidified by cooling on a mirror cooling drum with a surface temperature of 40 to 50°C using a static cling method to obtain an unstretched polyethylene terephthalate film. The obtained film was stretched 3.7-fold in the lengthwise direction through a heating roll group of 85°C to obtain a uniaxially oriented film. Next, one surface of the obtained uniaxially oriented film is uniformly treated by corona discharge under conditions of approximately 30 W/m²·minute. Then, a coating liquid of any of Examples 1 to 11 and Comparative Examples 1 to 3 formulated as shown in the columns "Mixed component" and "Mixing ratio" in Table 1 below was applied to the treated surface. Then, the coating liquid-applied film was directed to a tenter stretching machine. The coating liquid was dried by use of the heat of the tenter stretching machine. Then, the film was stretched 4.0-fold in the width direction at a temperature of 100°C and further heat-treated at a temperature of 230°C to obtain the laminate of interest in which an antistatic coating layer was formed on the base film (polyethylene terephthalate film), i.e., a polyethylene terephthalate film with an antistatic coating layer. The polyethylene terephthalate film had a thickness of 38 µm and the weight per unit area of the antistatic coating layer was 0.04 g/m². The laminates obtained using the respective coating liquids of Examples 1 to 11 and Comparative Examples 1 to 3 were evaluated or measured for the transparency, appearance quality, and surface specific resistivity of the antistatic coating layer by the following method:

### (Evaluation for transparency of antistatic coating layer)

The haze value of each laminate was measured according to Japanese Industrial Standards JIS-K7136 using an integrating sphere type turbidimeter NDH-2000 manufactured by Nippon Denshoku Industries, Co., Ltd. Then, the measured haze value was compared with a haze value measured in the same way for a polyethylene terephthalate film without an antistatic coating layer to determine the degree of a rise in the haze value caused by the antistatic coating layer provided thereon. The rises in the haze value are shown in the column "Haze" in Table 2. Smaller rises in the haze value represent higher transparency of the antistatic coating layer. Specifically, the rise in the haze value is preferably 0.5% or lower, and more preferably 0.2% or lower.

### (Evaluation for appearance quality of antistatic coating layer)

The antistatic coating layer of each laminate was visually observed under the light of a halogen lamp in a dark room. In the evaluation, the antistatic coating layer was given score 5 when it was excellent in appearance quality without any defect in appearance; the antistatic coating layer was given score 4 when it had favorable appearance quality, albeit with a minor defect of uneven coating; the antistatic coating layer was given score 3 when it had permissible appearance quality, albeit with defects of uneven coating to some extent; the antistatic coating layer was given score 2 when it had slightly poor appearance quality with slightly many defects of uneven coating; and the antistatic coating layer was given score 1 when it had poor appearance quality with many defects of uneven coating. The evaluation results are shown in the column "Appearance quality" in Table 2.

### (Measurement of surface specific resistivity of antistatic coating layer)

Each laminate immediately after production was placed with the antistatic coating layer side up in a temperature-controlled room set to 23°C and 50% RH and stored for 30 days with the antistatic coating layer irradiated with the light of a fluorescent lamp. The surface specific resistivity of the antistatic coating layer on each laminate was measured three times, i.e., before the start of storage (day 0), after a lapse of 7 days into storage, and after a lapse of 30 days into storage, using a low resistivity meter Loresta GP MCP-T600 manufactured by Mitsubishi Chemical Corp. or a high resistivity meter HP4339B and a measurement electrode HP16008B manufactured by Hewlett-Packard Japan, Ltd.. The measured values of surface specific resistivity are shown in the column "Surface specific resistivity" in Table 2. Since a surface specific resistivity value exceeding 1 × 10⁸ Ω is unmeasurable by Loresta GP MCP-T600, HP4339B and HP16008B were used in such a case. Moreover, the surface specific resistivity measurement was performed after humidity preconditioning of each laminate in an environment of 23°C and 50% RH for 30 minutes.

**Table 1**

| | Mixed component | Mixing ratio (mass ratio) | B1:C1 or B1:C2 (mass ratio) | Weight per unit area of antistatic coating layer (g/m²) |
|---|---|---|---|---|
| Example 1 | A1/B1/C1/E1 | 10/75/5/10 | 15:1 | 0.04 |
| Example 2 | A1/B1/C1/E1 | 10/70/10/10 | 7:1 | 0.04 |
| Example 3 | A1/B1/C1/E1 | 10/65/15/10 | 4:3:1 | 0.04 |
| Example 4 | A1/B1/C1/E1 | 10/60/20/10 | 3:1 | 0.04 |
| Example 5 | A1/B1/C1/E1 | 10/55/25/10 | 2.2:1 | 0.04 |
| Example 6 | A1/B1/C1/E1 | 10/50/30/10 | 1.7:1 | 0.04 |
| Example 7 | A1/B1/C1/E1 | 10/40/40/10 | 1:1 | 0.04 |
| Example 8 | A1/B1/C2/E1 | 10/70/10/10 | 7:1 | 0.04 |
| Example 9 | A1/B1/C2/E1 | 10/60/20/10 | 3:1 | 0.04 |
| Example 10 | A1/B1/C2/E1 | 10/50/30/10 | 1.7:1 | 0.04 |
| Example 11 | A1/B1/C2/E1 | 10/40/40/10 | 1:1 | 0.04 |
| Comparative Example 1 | A1/B1/C1/E1 | 10/80/0/10 | - | 0.04 |
| Comparative Example 2 | A1/B1/C1/E1 | 10/0/80/10 | - | 0.04 |
| Comparative Example 3 | A1/B1/C2/E1 | 10/80/0/10 | - | 0.04 |

In Table 1,
A1 represents Baytron P AG (manufactured by H.C. Starck GmbH) comprising polyethylene dioxythiophene and polystyrenesulfonic acid;
B1 represents a compound with an average molecular weight of 350 in which polyethylene oxide is added to polyglycerol represented by the formula (3) where n is 2;
C1 represents Denacol EX-521 (manufactured by Nagase ChemteX Corp.) comprising polyglycerol polyglycidyl ether;
C2 represents Denacol EX-313 (manufactured by Nagase ChemteX Corp.) comprising glycerol polyglycidyl ether;
E1 represents a nonionic surfactant represented by the following general formula (4) with a structure having polyethylene oxide in the side chain (provided that m and n in the formula (4) each represent an integer representing the number of moles of ethylene oxide added and m + n = 10).

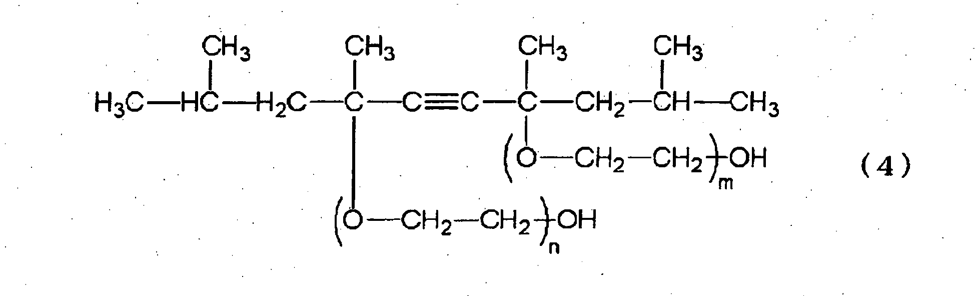

**Table 2**

| | Surface specific resistivity (Ω) | | | Haze (%) | Appearance quality |
|---|---|---|---|---|---|
| | 0 days | 7 days | 30 days | | |
| Example 1 | 7 × 10⁴ | 5 × 10⁵ | 7 × 10⁶ | 0.1 | 5 |
| Example 2 | 5 × 10⁴ | 1 × 10⁵ | 3 × 10⁵ | 0.1 | 5 |
| Example 3 | 5 × 10⁴ | 9 × 10⁴ | 2 × 10⁵ | 0.1 | 5 |
| Example 4 | 5 × 10⁴ | 7 × 10⁴ | 1 × 10⁵ | 0.2 | 5 |
| Example 5 | 7 × 10⁴ | 1 × 10⁵ | 3 × 10⁵ | 0.2 | 5 |
| Example 6 | 9 × 10⁴ | 2 × 10⁵ | 5 × 10⁵ | 0.2 | 5 |
| Example 7 | 2 × 10⁵ | 6 × 10⁵ | 4 × 10⁶ | 0.5 | 4 |
| Example 8 | 6 × 10⁴ | 3 × 10⁵ | 2 × 10⁶ | 0.1 | 5 |
| Example 9 | 5 × 10⁴ | 1 × 10⁵ | 2 × 10⁵ | 0.1 | 5 |
| Example 10 | 5 × 10⁴ | 6 × 10⁴ | 8 × 10⁴ | 0.1 | 5 |
| Example 11 | 5 × 10⁴ | 1 × 10⁵ | 1 × 10⁵ | 0.2 | 4 |
| Comparative Example 1 | 1 × 10⁵ | 3 × 10⁶ | 1 × 10⁹ | 0.1 | 5 |
| Comparative Example 2 | 3 × 10⁵ | 5 × 10⁵ | 3 × 10⁶ | 0.5 | 3 |
| Comparative Example 3 | 1 × 10⁵ | 3 × 10⁶ | 1 × 10⁹ | 0.1 | 5 |

The results shown in Table 2 demonstrated that use of the coating liquids of Comparative Examples 1 and 3 containing no epoxy crosslinking agent, which is the component C, significantly increased the measured value of surface specific resistivity over time compared with use of the coating liquids of Examples 1 to 11. The results also demonstrated that use of the coating liquid of Comparative Example 2 containing no component B such as an alkylene oxide adduct of polyglycerol results in poor appearance quality in the evaluation compared with use of the coating liquids of Examples 1 to 11.

## Claims

1. A polyester film with an antistatic coating layer, wherein
the antistatic coating layer is formed on the polyester film by applying a coating liquid to at least one surface of the polyester film and drying the coating liquid thereon, wherein the coating liquid contains:
a component A, which is an electron conductive compound, the electron conductive compound being a polymer obtained by polymerizing thiophene or a derivative thereof;
a component B, which is at least one compound selected from the group consisting of a polyalkylene oxide, glycerol, a polyglycerol, and an alkylene oxide adduct of glycerol or polyglycerol, or at least one derivative thereof; and
a component C, which is an epoxy crosslinking agent, wherein the amount of the component C in the total mass of the antistatic coating layer is 5% by mass or more and 60% by mass or less,
wherein the ratio between the component B and the component C in the antistatic coating layer is set such that when the mass of the component C is represented by 1, the mass of the component B is represented by 0.3 to 15.

2. The polyester film according to claim 1, wherein the amount of component B in the total mass of the antistatic coating layer is 5% by mass or more and 80% by mass or less.

3. The polyester film according to claim 1 or 2, wherein the ratio between the component B and the component C in the antistatic coating layer is set such that when the mass of the component C is represented by 1, the mass of the component B is represented by 1 to 10.

4. The polyester film according to claim 3, wherein the ratio between the component B and the component C in the antistatic coating layer is set such that when the mass of the component C is represented by 1, the mass of the component B is represented by 1.5 to 7.5.

5. The polyester film according to any one of claims 1 to 4, wherein the amount of the component C in the total mass of the antistatic coating layer is 7.5% by mass or more and 40% by mass or less.

6. The polyester film according to claim 5, wherein the amount of the component C in the total mass of the antistatic coating layer is 10% by mass or more and 35% by mass or less.

7. The polyester film according to claim 1, wherein the amount of the component C in the total mass of the antistatic coating layer is 15% by mass or more and 60% by mass or less.

## Patentansprüche

1. Polyesterfilm mit einer antistatischen Beschichtungsschicht, wobei
die antistatische Beschichtungsschicht auf dem Polyesterfilm durch Auftragen einer Beschichtungsflüssigkeit auf wenigstens eine Oberfläche des Polyesterfilms und Trocknen der Beschichtungsflüssigkeit darauf gebildet wird, wobei die Beschichtungsflüssigkeit enthält:
eine Komponente A, die eine elektronenleitende Verbindung ist, wobei die elektronenleitende Verbindung ein Polymer ist, das durch Polymerisieren von Thiophen oder einem Derivat davon erhalten wird;
eine Komponente B, die wenigstens eine Verbindung, ausgewählt aus der Gruppe, bestehend aus einem Polyalkylenoxid, Glycerin, einem Polyglycerin und einem Alkylenoxidaddukt von Glycerin oder Polyglycerin, ausgewählt ist, oder wenigstens ein Derivat davon ist, und
eine Komponente C, die ein Epoxy-Vernetzungsmittel ist, wobei die Menge der Komponente C in der Gesamtmasse der antistatischen Beschichtungsschicht 5 Massen-% oder mehr und 60 Massen-% oder weniger ist,
wobei das Verhältnis zwischen der Komponente B und der Komponente C in der antistatischen Beschichtungsschicht so eingestellt ist, dass, wenn die Masse der Komponente C durch 1 dargestellt wird, die Masse der Komponente B durch 0,3 bis 15 dargestellt wird.

2. Polyesterfilm gemäß Anspruch 1, wobei die Menge an Komponente B in der gesamten Masse der antistatischen Beschichtungsschicht 5 Massen-% oder mehr und 80 Massen-% oder weniger ist.

3. Polyesterfilm gemäß Anspruch 1 oder 2, wobei das Verhältnis zwischen der Komponente B und der Komponente C in der antistatischen Beschichtungsschicht so eingestellt ist, dass, wenn die Masse der Komponente C durch 1 dargestellt wird, die Masse der Komponente B durch 1 bis 10 dargestellt wird.

4. Polyesterfilm gemäß Anspruch 3, wobei das Verhältnis zwischen der Komponente B und der Komponente C in der antistatischen Beschichtungsschicht so eingestellt ist, dass, wenn die Masse der Komponente C durch 1 dargestellt wird, die Masse der Komponente B durch 1,5 bis 7,5 dargestellt wird.

5. Polyesterfilm gemäß einem der Ansprüche 1 bis 4, wobei die Menge der Komponente C in der gesamten Masse der antistatischen Beschichtungsschicht 7,5 Massen-% oder mehr und 40 Massen-% oder weniger ist.

6. Polyesterfilm gemäß Anspruch 5, wobei die Menge der Komponente C in der gesamten Masse der antistatischen Beschichtungsschicht 10 Massen-% oder mehr und 35 Massen-% oder weniger ist.

7. Polyesterfilm gemäß Anspruch 1, wobei die Menge der Komponente C in der gesamten Masse der antistatischen Beschichtungsschicht 15 Massen-% oder mehr und 60 Massen-% oder weniger ist.

## Revendications

1. Film de polyester avec une couche de revêtement antistatique, dans lequel
la couche de revêtement antistatique est formée sur le film de polyester par application d'un liquide de revêtement à au moins une surface du film de polyester et séchage du liquide de revêtement sur celle-ci, ledit liquide de revêtement contenant :
un constituant A, qui est un composé conducteur d'électrons, le composé conducteur d'électrons étant un polymère obtenu par polymérisation du thiophène ou d'un de ses dérivés ;
un constituant B, qui est au moins un composé choisi dans le groupe consistant en un poly(oxyde d'alkylène), le glycérol, un polyglycérol, et un produit d'addition d'oxyde d'alkylène au glycérol ou au polyglycérol, ou au moins un de leurs dérivés ; et
un constituant C, qui est un agent de réticulation époxy, la quantité du constituant C dans la masse totale de la couche de revêtement antistatique allant de 5 % en masse ou plus à 60 % en masse ou moins,
le rapport entre le constituant B et le constituant C dans la couche de revêtement antistatique étant choisi de telle sorte que, lorsque la masse du constituant C est représentée par 1, la masse du constituant B est représentée par 0,3 à 15.

2. Film de polyester suivant la revendication 1, dans lequel la quantité de constituant B dans la masse totale de la couche de revêtement antistatique va de 5 % en masse ou plus à 80 % en masse ou moins.

3. Film de polyester suivant la revendication 1 ou 2, dans lequel le rapport entre le constituant B et le constituant C dans la couche de revêtement antistatique est fixé de telle sorte que, lorsque la masse du constituant C est représentée par 1, la masse du constituant B est représentée par 1 à 10.

4. Film de polyester suivant la revendication 3, dans lequel le rapport entre le constituant B et le constituant C dans la couche de revêtement antistatique est fixé de telle sorte que, lorsque la masse du constituant C est représentée par 1, la masse du constituant B est représentée par 1,5 à 7,5.

5. Film de polyester suivant l'une quelconque des revendications 1 à 4, dans lequel la quantité du constituant C dans la masse totale de la couche de revêtement antistatique va de 7,5 % en masse ou plus à 40 % en masse ou moins.

6. Film de polyester suivant la revendication 5, dans lequel la quantité du constituant C dans la masse totale de la couche de revêtement antistatique va de 10 % en masse ou plus à 35 % en masse ou moins.

7. Film de polyester suivant la revendication 1, dans lequel la quantité du constituant C dans la masse totale de la couche de revêtement antistatique va de 15 % en masse ou plus à 60 % en masse ou moins.
